# EUROPEAN PATENT SPECIFICATION

(11) **EP 2 364 824 B1**
(45) Date of publication and mention of the grant of the patent: **26.02.2014**
(21) Application number: 10425063.4
(22) Date of filing: 11.03.2010
(51) Int. Cl.: B25J 15/00

(54) **A device for moving objects and a machine comprising said device**
Vorrichtung zum Bewegen von Objekten und Maschine mit besagter Vorrichtung
Dispositif pour déplacer des objets et machine comprenant le dispositif

(43) Date of publication of application: 14.09.2011
(73) Proprietor: Motor Power Company S.r.l., 42024 Castelnovo Sotto (RE) (IT)
(72) Inventor: Mignano, Paolo, 42015 Correggio (Reggio Emilia) (IT)
(74) Representative: Colò, Chiara

(56) References cited:
- EP-A1- 0 066 014
- US-A- 2 858 947
- US-A- 4 762 455
- US-B1- 6 435 582

## Description

The invention relates to a device for moving objects. The invention also relates to a machine for moving objects comprising at least two devices for moving objects.

The invention relates in particular to a device able to grip an object in an initial non-predetermined position and to bring the object into a final position in which the object has a predetermined orientation.

The market at present offers some devices able to perform the above-described operations. Mainly these are robotic anthropomorphic arms, provided with a gripping organ for the object which, under the control of a special command algorithm, can displace the object picked up to anywhere in space.

These robotic arms are extremely complex and expensive devices, to the point where often, in structures and production lines where they are used, there is only one device present. In this way, all the movement and placing operations are relatively long, as the objects have to be moved one by one. It is often necessary to provide storage zones for the objects that have already been processed by the robot arm, such as not excessively to slow down all the operations that have to be subsequently performed by the robot arm. An example of prior art device of the kind above described is describe in document US 2,858,947.

The aim of the present invention is to provide a device for moving objects which is simple, not awkwardly large, and economical.

An advantage of the device of the invention is that, by virtue of its simplicity and contained dimensions, several units can be used contemporaneously, such as to enable contemporaneous movement of several objects.

Further characteristics and advantages of the present invention will more clearly emerge from the following description, provided by way of nonlimiting example, of a preferred though not exclusive embodiment of the invention, made with reference to the accompanying figures of the drawings, in which:

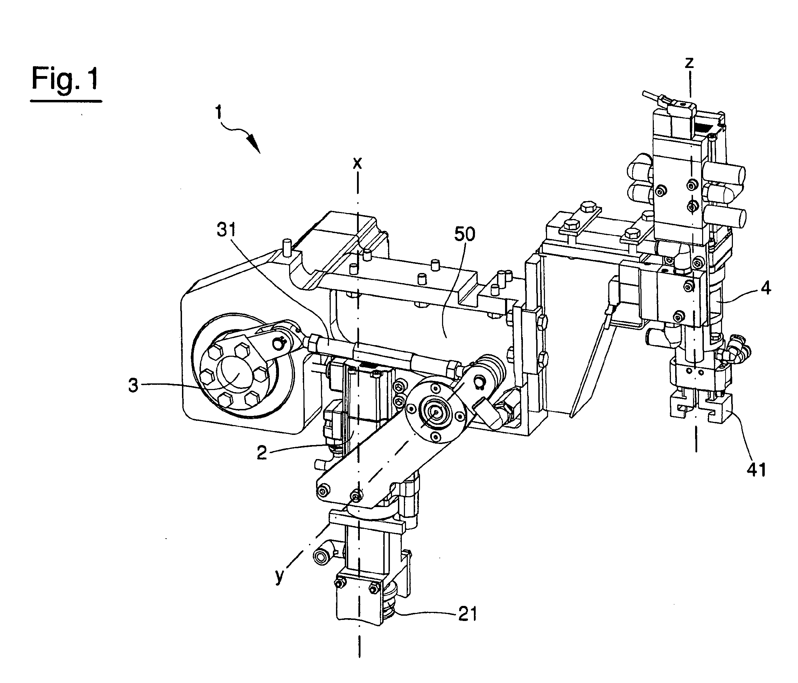

figure 1 is a schematic view of the device of the present invention, in an initial operating configuration;
figures 2, 3, 4 show the device of figure 1 in successive operating configurations of movement of an object;
figure 5 is a machine comprising three devices of the present invention.

The device for moving objects, denoted in its entirety by 1, comprises a first actuator 2, provided with gripping means 21 for gripping an object 100. In a preferred embodiment, the gripping means 21 are constituted by a sucker which offers the advantage of being able to adhere to surfaces that are not perfectly flat, for example concave or convex curved surfaces.

The first actuator 2 is predisposed to rotate the object 100 about a first rotation axis x. Preferably the actuator 2 is constituted by an electric motor because of the precise degree of control that this type of actuator provides. The use of an electric motor enables great precision to be achieved in the size of rotations imparted on the object 100 about the first rotation axis x. A second actuator 3 is predisposed to rotate the first actuator 2 about a second rotation axis y which is perpendicular to the first rotation axis x. In a preferred embodiment of the device, the first actuator 2 is associated to a support structure 50 rotatably about a second rotation axis y. The second actuator 3 too is associated to the support structure 50 and is further kinematically connected to the first actuator 2. In particular, the second actuator 3 is connected to the first actuator 2 preferably by means of a con rod 31. The connection between the second actuator 3 and the first actuator 2 can be obtained with any other drive transmission means, such as for example a direct-drive torque motor.

Through the con rod 31, the second actuator 3 determines the rotation of the first actuator 2 about the second rotation axis y. The second actuator 3 is preferably also constituted by an electric motor, for the same reasons as for the first actuator 2. The second actuator 3 exhibits a rotor the rotation axis of which is parallel to the second rotation axis y, such that, by means of the con rod 31, it can determine the rotation of the first actuator 2.

The device of the present invention further comprises a third actuator 4 predisposed to rotate the object 100 about a third rotation axis z which is perpendicular to the second rotation axis y. The third actuator 4 is provided with gripping means 41 for gripping the object 100. In the embodiment illustrated in the figures, the gripping means 41 of the third actuator 4 are constituted by pliers, but they could be constituted by a sucker or another gripping device. The use of pliers as the gripping means 41 of the third actuator 4 is particularly suitable in a case in which the object 100 is constituted by a bottle. As will be more fully described hereinafter, the gripping means 41 in the form of pliers are particularly suitable for gripping a bottle at a neck portion thereof. Naturally, for objects 100 of different nature and shape, both the gripping means 21 of the first actuator 2 and the gripping means of the third actuator 4 could be of a different type.

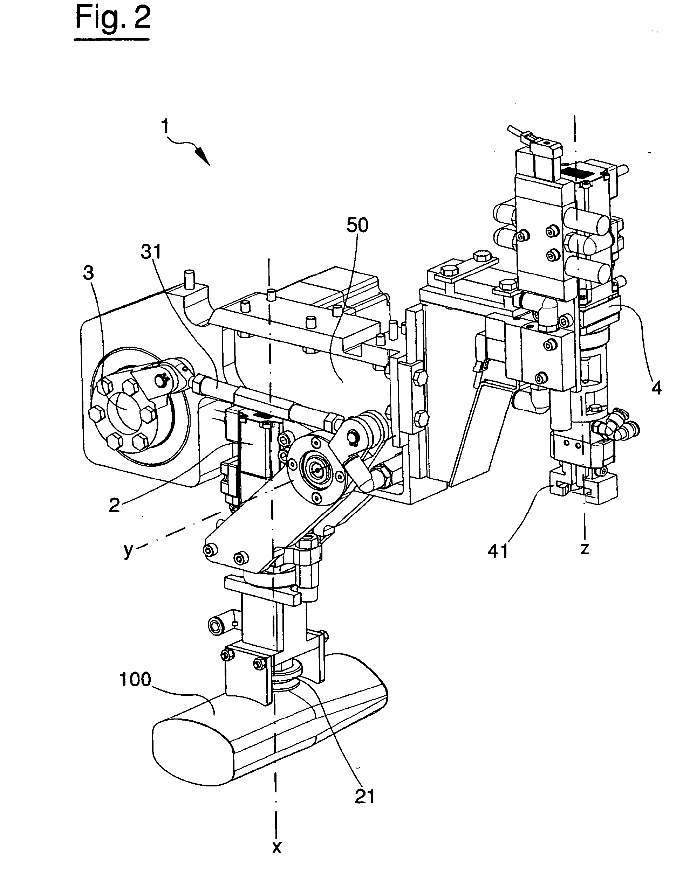

The device of the present invention functions as described herein below. An object 100 can be supplied to the device 1 in any initial position. Firstly, the first actuator 2 is in a gripping position, for example with the gripping means 21 facing downwards (figure 2). The device 1 is translated such that the gripping means 21 of the first actuator 2 enter into contact with the object 100. To this end, all the device 1, or alternatively the gripping means 21 can translate along the first rotation axis x with respect to the first actuator 2. Thereafter, the gripping means 21 are activated such as to perform the gripping of the object 100 which, in this way, becomes solidly constrained to the first actuator 2.

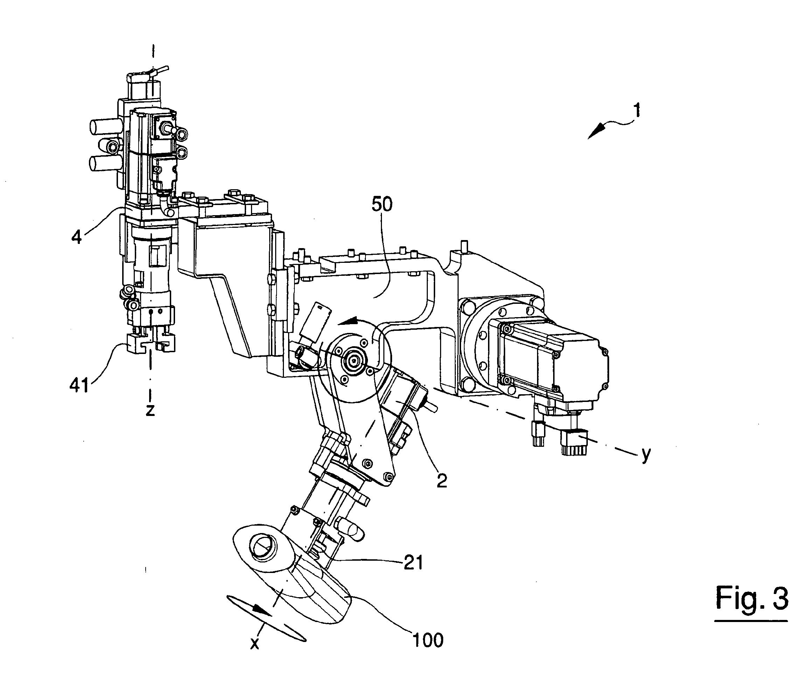

Once the object 100 has been gripped, the first actuator 2 is activated to rotate about the first rotation axis x (figure 3) by a determined angle, rotating the object 100 from an initial position to a second position.

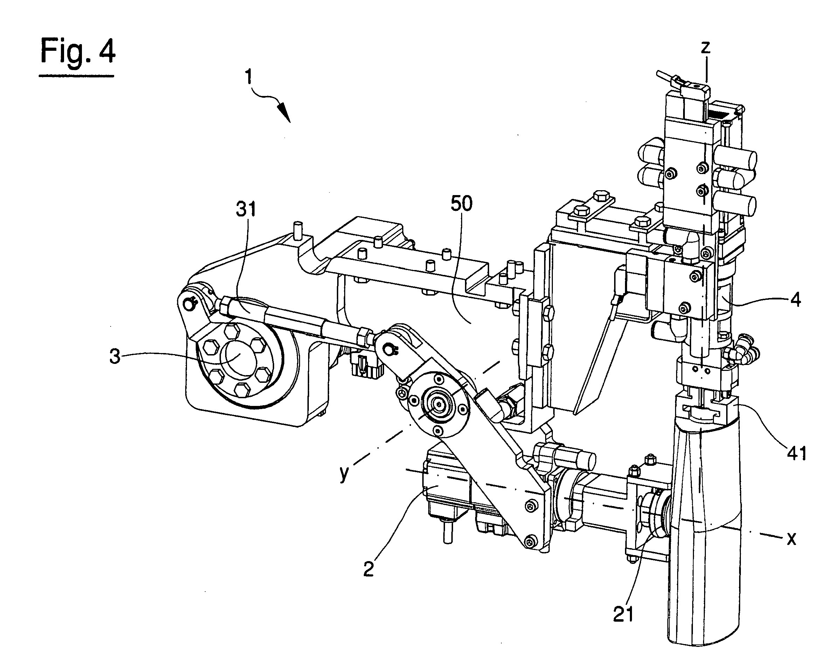

Then, or at the same time as the rotation of the first actuator 2, the second actuator 3 is rotated about the rotation axis thereof such as to rotate the first actuator 2 about the second rotation axis y. The rotation imparted on the first actuator 2 by the second actuator 3 brings the first actuator 2 from the gripping position to a release position (figure 4) in which the object 100 can be gripped by the gripping means 41 of the third actuator 4. In the example illustrated in the figures, in which the object 100 is constituted by a bottle, the release position of the first actuator 2 corresponds to a vertical position of the bottle, in which the neck of the bottle is facing upwards. The activation of the second actuator 3 can be contemporaneous or can follow the activation of the first actuator.

In the release position of the first actuator 2, the object 100 can be gripped by the gripping means 41 of the third actuator 4. To this end, the gripping means 41 in the form of pliers can be predisposed in an initially-open configuration, in which the portion of the object 100 which is to be gripped can be positioned between the jaws of the pliers, as shown in figure 4. Thereafter, once the object 100 has reached the correct position, the jaws can close to grip the object 100, which thus becomes solidly constrained to the third actuator 4. At this point, the third actuator 4 is activated in rotation about the third rotation axis z, thus rotating the object 100 up to a final position thereof. The gripping means 41 might be provided with the possibility of translating along the third rotation axis z with respect to the third actuator 4. In the final position, the object 100 can be released and sent on to following work operations.

At the end of the described sequence, all the actuators return to their initial positions.

The first and the second actuators, 2, 3 could be solidly translatable in a transversal direction with respect to the third rotation axis z. This could be useful in a case in which the gripping means 21 of the first actuator 2 interfere with the object 100 while it is rotated about the third axis of rotation z, or in a case in which the gripping means 21 interfere with the object 100 while the first actuator 2 is returning from the release position to the gripping position. In these cases, after the object 100 has been gripped by the gripping means 41 of the third actuator 4, the group constituted by the first actuator 2 and the second actuator 3 can translate, distancing from the object 100.

The device of the present invention can advantageously be provided with locating means, not illustrated in detail, predisposed to detect the initial position of the object 100.

The locating means can comprise, for example, optical detecting tools of the object 100, such as t.v. cameras or photographic apparatus. Control means, not illustrated in detail, can be connected to the locating means to receive in input the initial position of the object 100 detected by the locating means. Using a special operating algorithm, the control means are further predisposed to compare the initial position of the object 100 with a determined final position into which the object is to be moved; following the said comparison, the size of the rotations of the first, second and third actuators can be calculated such as to bring the object 100 from the initial position into the final position. In this way, thanks to the presence of the locating means and the control means, the device of the present invention is able to bring the objects 100 into the desired final position regardless of the initial position of the objects 100. The objects 100 can therefore be supplied to the device 1 randomly and disorderedly, with no need to predispose initial positioning stations of the objects 100.

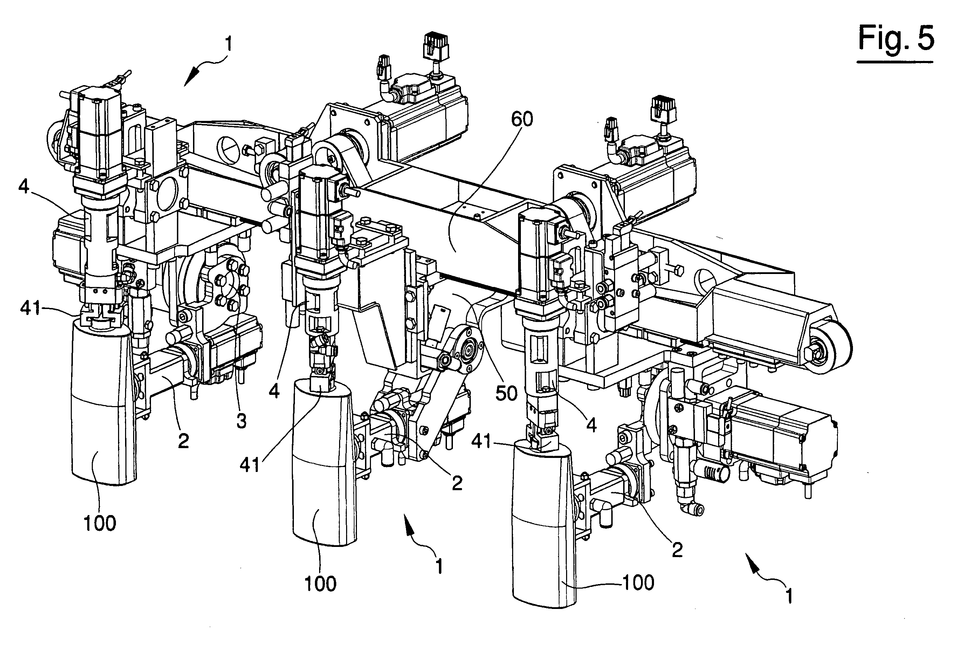

Thanks to its advantageous characteristics, as shown in figure 5, at least two or more devices 1 of the present invention can be associated to one another in order to enable contemporaneous movement of two or more objects 100. The two or more devices 1 of the present invention can be provided with the ability to translate respectively to one another, in either a reciprocal nearing or distancing direction. This enables the devices 1 to move the relative object 100 with no risk of interference with the movements operated by the adjacent devices 1. The relative positions between the devices 1 can be regulated fixedly in relation to the morphological characteristics of the objects to be moved, or can be regulated in real-time via the above-described control means. To this end, the operative algorithm of the control means can also be predisposed to calculate, starting from the data on the initial position of the various objects 100, the reciprocal distances which have to be maintained between the various devices 1 in order to prevent the various objects 100 from interfering with one another during the respective movements.

The two or more devices 1 of the present invention can be slidably associated to a crossbar 60 in order to constitute a machine for moving objects. Sliding means, not illustrated in detail as a technical expert in the sector is perfectly able to identify an appropriate embodiment of the means, can be provided for translating the devices 1 along the crossbar 60. In the preferred embodiment of the machine illustrated in figure 5, three devices 1 are associated to the crossbar 60. In the preferred embodiment, the device 1 in the central position is fixed, while the two adjacent devices are slidable along the crossbar 60.

In a further embodiment, not illustrated in the accompanying figures, all three devices 1 are slidable along the crossbar 60.

## Claims

1. A device for moving objects, comprising: a first actuator (2), provided with gripping means (21) for gripping an object (100), which first actuator (2) is predisposed to rotate the object (100) about a first rotation axis (x); a second actuator (3), predisposed to rotate the first actuator (2) about a second rotation axis (y) which is perpendicular to the first rotation axis (X); a third actuator (4), provided with gripping means (41) for gripping the object (100), which third actuator (4) is predisposed to rotate the object (100) about a third rotation axis (z) which third rotation axis (z) is perpendicular to the second rotation axis (y);
**characterised in that** it comprises:
locating means predisposed to detect an initial position of the object (100);
control means predisposed to receive in input the initial position of the object (100) and to calculate a size of the rotations of the first actuator (2),
the second actuator (3) and the third actuator (4) such as to move the object (100) from the initial position to a determined final position.

2. The device of claim 1, wherein the first actuator (2) is predisposed to grip the object (100) with gripping means (21) thereof and to rotate the object (100) about the first rotation axis (x) between an initial position and a second position.

3. The device of one of the preceding clams, wherein the first actuator (2) is mobile about the second rotation axis (y) between a gripping position, in which it grips the object (100) by means of gripping means (21), and a release position, in which the object (100) can be gripped by the gripping means (41) of the third actuator (4).

4. The device of claim 3, wherein the third actuator (4) is predisposed to grip the object (100) in the release position of the first actuator (2) and to rotate the object (100) about the third rotation axis (z) between the release position and a final position.

5. The device of one of the preceding claims, comprising a support structure (50) to which the first actuator (2) is rotatably associated about the second rotation axis (y).

6. The device of claim 5, wherein the second actuator (3) is associated to the support structure (50) and is kinematically connected to the first actuator (2).

7. The device of claim 6, wherein the second actuator (3) is connected to the first actuator (2) by means of a con rod (31) by means of which the second actuator (3) determines a rotation of the first actuator (2) about the second rotation axis (y).

8. A machine for moving objects, comprising at least two devices (1) for moving objects according to one of the preceding claims.

9. The machine of claim 8, wherein the at least two devices (1) for moving objects are mobile in reciprocal nearing and distancing directions.

10. The machine of claim 9, wherein at least one of the two devices (1) for moving objects is slidably associated to a crossbar (60), sliding means being provided for translating the device (1) along the crossbar (60).

## Patentansprüche

1. Vorrichtung zum Bewegen von Objekten, umfassend:
einen ersten Aktor (2), der mit Greifmitteln (21) zum Greifen eines Objekts (100) bereitgestellt ist,
wobei der erste Aktor (2) dazu ausgelegt ist, das Objekt (100) um eine erste Drehachse (x) herum zu drehen; einen zweiten Aktor (3), der dazu ausgelegt ist, den ersten Aktor (2) um eine zweite Drehachse (y) herum zu drehen, die lotrecht zur ersten Drehachse (X) ist; einen dritten Aktor (4), der mit Greifmitteln (41) zum Greifen des Objekts (100) bereitgestellt ist, wobei der dritte Aktor (4) dazu ausgelegt ist, das Objekt (100) um eine dritte Drehachse (z) herum zu drehen, wobei die dritte Drehachse (z) lotrecht zur zweiten Drehachse (y) ist;
**dadurch gekennzeichnet, dass** sie Folgendes umfasst:
Lokalisierungsmittel, die dazu ausgelegt sind, eine Ausgangsstellung des Objekts (100) zu erfassen;
Steuermittel, die dazu ausgelegt sind, die Eingabe der Ausgangsstellung des Objekts (100) zu empfangen und eine Größe der Drehungen des ersten Aktors (2), des zweiten Aktors (3) und des dritten Aktors (4) zu berechnen, sodass das Objekt (100) von der Ausgangsstellung in eine festgelegte Endstellung bewegt wird.

2. Vorrichtung nach Anspruch 1, wobei der erste Aktor (2) dazu ausgelegt ist, mit dessen Greifmitteln (21) das Objekt (100) zu greifen und das Objekt (100) um die erste Drehachse (x) zwischen einer Ausgangsstellung und einer zweiten Stellung zu drehen.

3. Vorrichtung nach einem der vorangehenden Ansprüche, wobei der erste Aktor (2) um die zweite Drehachse (y) herum zwischen einer Greifstellung, in der er das Objekt (100) mithilfe von Greifmitteln (21) greift, und einer Freigabestellung, in der das Objekt (100) von den Greifmitteln (41) des dritten Aktors (4) gegriffen werden kann, beweglich ist.

4. Vorrichtung nach Anspruch 3, wobei der dritte Aktor (4) dazu ausgelegt ist, das Objekt (100) in der Freigabestellung des ersten Aktors (2) zu greifen und das Objekt (100) um die dritte Drehachse (z) herum zwischen der Freigabestellung und einer Endstellung zu drehen.

5. Vorrichtung nach einem der vorangehenden Ansprüche, umfassend eine Trägerstruktur (50), an die der erste Aktor (2) drehbar um die zweite Drehachse (y) herum angeschlossen ist.

6. Vorrichtung nach Anspruch 5, wobei der zweite Aktor (3) an die Trägerstruktur (50) angeschlossen ist und kinematisch mit dem ersten Aktor (2) verbunden ist.

7. Vorrichtung nach Anspruch 6, wobei der zweite Aktor (3) mithilfe einer Pleuelstange (31) mit dem ersten Aktor (2) verbunden ist, mithilfe welcher der zweite Aktor (3) eine Drehung des ersten Aktors (2) um die zweite Drehachse (y) herum verursacht.

8. Maschine zum Bewegen von Objekten, umfassend mindestens zwei Vorrichtungen (1) zum Bewegen von Objekten nach einem der vorangehenden Ansprüche.

9. Maschine nach Anspruch 8, wobei die mindestens zwei Vorrichtungen (1) zum Bewegen von Objekten in reziproken Annäherungs- und Beabstandungsrichtungen beweglich sind.

10. Maschine nach Anspruch 9, wobei mindestens eine der zwei Vorrichtungen (1) zum Bewegen von Objekten verschiebbar an eine Traverse (60) angeschlossen ist, wobei für die Translation der Vorrichtung (1) entlang der Traverse (60) Schiebemittel bereitgestellt sind.

## Revendications

1. Dispositif pour déplacer des objets, comprenant: un premier actionneur (2) pourvu de moyens de préhension (21) servant à prendre un objet (100), ledit premier actionneur (2) est conçu pour faire tourner l'objet (100) autour d'un premier axe de rotation (x) ; un second actionneur (3), conçu pour faire tourner le premier actionneur (2) autour d'un second axe de rotation (y) étant perpendiculaire au premier axe de rotation (X); un troisième actionneur (4) pourvu de moyens de préhension (41) servant à prendre l'objet (100), ledit troisième actionneur (4) est conçu pour faire tourner l'objet (100) autour d'un troisième axe de rotation (z), ledit troisième axe de rotation (z) étant perpendiculaire au second axe de rotation (y); **caractérisé en ce qu'**il comprend:
des moyens de localisation conçus pour détecter une position initiale de l'objet (100); des moyens de commande conçus pour recevoir en entrée la position initiale de l'objet (100) et pour calculer l'ampleur des rotations du premier actionneur (2), du second actionneur (3) et du troisième actionneur (4) de sorte à déplacer l'objet (100) de la position initiale à une position finale déterminée.

2. Dispositif selon la revendication 1, dans lequel le premier actionneur (2) est conçu pour prendre l'objet (100) avec lesdits moyens de préhension (21) et pour faire tourner l'objet (100) autour du premier axe de rotation (x) entre une position initiale et une seconde position.

3. Dispositif selon l'une des revendications précédentes, dans lequel le premier actionneur (2) est mobile autour du second axe de rotation (y) entre une position de préhension, dans laquelle il prend l'objet (100) par le biais de moyens de préhension (21), et une position de déclenchement, dans laquelle l'objet (100) peut être pris par les éléments de préhension (41) du troisième actionneur (4).

4. Dispositif selon la revendication 3, dans lequel le troisième actionneur (4) est conçu pour prendre l'objet (100) dans la position de déclenchement du premier actionneur (2) et pour faire tourner l'objet (100) autour du troisième axe de rotation (z) entre la position de déclenchement et une position finale.

5. Dispositif selon l'une des revendications précédentes, comprenant une structure de support (50) à laquelle le premier actionneur (2) est associé de façon rotative autour du second axe de rotation (y).

6. Dispositif selon la revendication 5, dans lequel le second actionneur (3) est associé à la structure de support (50) et est cinématiquement relié au premier actionneur (2).

7. Dispositif selon la revendication 6, dans lequel le second actionneur (3) est relié au premier actionneur (2) au moyen d'une bielle (31) par laquelle le second actionneur (3) détermine une rotation du premier actionneur (2) autour du second axe de rotation (y).

8. Machine pour déplacer des objets, comprenant au moins deux dispositifs (1) servant à déplacer des objets selon l'une des revendications précédentes.

9. Machine selon la revendication 8, dans laquelle les au moins deux dispositifs (1) servant à déplacer des objets sont mobiles dans des directions de rapprochement et d'éloignement réciproques.

10. Machine selon la revendication 9, dans laquelle au moins un des deux dispositifs (1) servant à déplacer des objets est associé de façon coulissante à une traverse (60), des moyens de coulissement étant prévus pour déplacer le dispositif (1) le long de la traverse (60).
